# EUROPEAN PATENT APPLICATION

(11) **EP 4 727 176 A2**
(43) Date of publication of application: **15.04.2026**
(21) Application number: 26161391.3
(22) Date of filing: 19.11.2019
(51) Int. Cl.: H04W 4/021

(54) **SYSTEM AND METHOD FOR ACTIVITY VALIDATION**

(30) Priority: 19.11.2018 US 201862769422 P
(62) Divisional of application: 19887778.9
(71) Applicant: Ethos Connected, LLC, Lincoln, NE 68508 (US)
(72) Inventor: FRICKE, Lukas, J., Ulysses, 68669 (US); PRANGE, Jerry, Ulysses, 68669 (US)
(74) Representative: Swindell & Pearson Limited

(57) **Abstract**

A system for animal population activity verification may include a user device configured to receive one or more chore completion inputs, a barn node configured to identify an interaction between the barn node and the user device, and a barn hub communicatively coupled to the barn node. In embodiments, the barn hub is configured to: identify a spatial relationship between the barn hub and the user device; receive identified interaction data; and receive the one or more chore completion inputs. In embodiments, the system further includes a server configured to: receive the one or more chore completion inputs, the identified interaction data, and identified spatial relationship data; store a transaction log in memory; and identify one or more incomplete chores of the list of chores based on at least one of the one or more chore completion inputs, the identified interaction data, and the identified spatial relationship data.

## Description

### CROSS-REFERENCE TO RELATED APPLICATIONS

The present application claims priority to U.S. Provisional Application Serial Number 62/769,422, filed November 19, 2018, entitled SYSTEM AND METHOD FOR ACTIVITY VALIDATION, naming Lucas J. Fricke as inventor, and U.S. Provisional Application Serial Number 62/905,552, filed September 25, 2019, entitled SYSTEM AND METHOD FOR ACTIVITY VALIDATION, naming Lucas J. Fricke as inventor, and which are incorporated herein by reference in their entirety. The present application also claims priority to U.S. Application Serial Number 16/688,332, filed November 19, 2019, entitled SYSTEM AND METHOD FOR ACTIVITY VALIDATION, naming Lucas J. Fricke and Jerry Prange as inventors, which also is incorporated herein by reference in the entirety.

### TECHNICAL FIELD

The present invention generally relates to activity and chore validation and, more specifically, to a system and method for validating chores performed in the agriculture industry.

### BACKGROUND

Accurate and efficient data collection and distribution is an important aspect of many different industries including agricultural industries, food production industries (e.g., pork, beef, poultry), and the like. Additionally, consumers often desire access to data associated with products before and after purchasing in order to verify the nature and quality of the products they are purchasing. In the context of agriculture, consumers have a desire to know that the animal products they are purchasing originate from where they purport to come from, that the animals were treated humanely, and that the animals were properly taken care of (e.g., administered vaccines, fed regularly, and the like). However, current systems and methods, such as the PQA+ in the pork industry, are primarily paper-based systems. As such, current systems and methods suffer in that data is difficult to collect, share, and maintain. Furthermore, the ability to change and/or falsify data often leads to a lack of transparency between producers and consumers. As such, there exists a need for a system and method which cure one or more of the shortfalls of previous approaches identified above.

### SUMMARY

A system for animal population activity verification is disclosed. In embodiments, the system includes a user device associated with a user, the user device configured to receive one or more chore completion inputs indicative of a completion of one or more chores of a list of chores. The system may further include a barn node configured to identify an interaction between the barn node and the user device, and a barn hub communicatively coupled to the barn node. In embodiments, the barn hub is configured to: identify a spatial relationship between the barn hub and the user device; receive identified interaction data associated with the identified interaction from the barn node; and receive the one or more chore completion inputs. In embodiments, the system may further include a server communicatively coupled to the barn hub, the server including one or more processors configured to execute a set of program instructions stored in a memory, the set of program instructions configured to cause the one or more processors to: receive one or more signals from the barn hub, the one or more signals including the one or more chore completion inputs, the identified interaction data, and identified spatial relationship data associated with the identified spatial relationship; store a transaction log in the memory, the transaction log including the chore completion inputs, the identified interaction data, and the spatial relationship data; and identify one or more incomplete chores of the list of chores based on at least one of the one or more chore completion inputs, the identified interaction data, and the identified spatial relationship data.

A system is disclosed. In embodiment, the system includes a user device configured to receive one or more chore completion inputs indicative of a completion of one or more chores of a list of chores. The system may further include a barn hub configured to identify a spatial relationship between the barn hub and the user device, receive identified interaction data associated with an identified interaction between a barn node and the user device receive the one or more chore completion inputs. The system may further include a server communicatively coupled to the barn hub, the server including one or more processors configured to execute a set of program instructions stored in memory, the set of program instructions configured to cause the one or more processors to: receive one or more signals from the barn node, the one or more signals including the chore completion inputs, the identified interaction data, and identified spatial relationship data associated with the identified spatial relationship; identify one or more incomplete chores of the list of chores based on at least one of the one or more chore completion inputs, the identified interaction data, and the identified spatial relationship data; and identify one or more complete chores of the list of chores based on at least one of the one or more chore completion inputs, the identified interaction data, and the identified spatial relationship data.

A method for verifying animal population activities is disclosed. In embodiments, the method includes: identifying a spatial relationship between a barn hub and a user device; identifying an interaction between a barn node and the user device; receiving one or more chore completion inputs from a user, the one or more chore completion inputs indicative of a completion of one or more chores of a list of chores associated with the identified spatial relationship; and identifying one or more incomplete chores of the list of chores based on at least one of the one or more chore completion inputs, identified interaction data associated with the identified interaction, and identified spatial relationship data associated with the identified spatial relationship.

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, serve to explain the principles of the invention.

### BRIEF DESCRIPTION OF THE DRAWINGS

The numerous advantages of the disclosure may be better understood by those skilled in the art by reference to the accompanying figures in which:
FIG. 1 illustrates a simplified block diagram of a system for animal population activity validation, in accordance with one or more embodiments of the present disclosure.
FIG. 2A illustrates a simplified aerial view of a barn equipped with a system for animal population activity validation, in accordance with one or more embodiments of the present disclosure.
FIG. 2B illustrates a simplified aerial view of a barn equipped with a system for animal population activity validation, in accordance with one or more embodiments of the present disclosure.
FIG. 3A illustrates a display page of a user device depicting a login page of an application, in accordance with one or more embodiments of the present disclosure.
FIG. 3B illustrates a display page of a user device depicting a login page of an application, in accordance with one or more embodiments of the present disclosure.
FIG. 3C illustrates a display page of a user device depicting selectable options of an application, in accordance with one or more embodiments of the present disclosure.
FIG. 3D illustrates a display page of a user device depicting an activity/chore checklist, in accordance with one or more embodiments of the present disclosure.
FIG. 3E illustrates a display page of a user device depicting details of a selected activity, in accordance with one or more embodiments of the present disclosure.
FIG. 3F illustrates a display page of a user device depicting activities/chores to be performed, in accordance with one or more embodiments of the present disclosure.
FIG. 3G illustrates a display page of a user device depicting an animal mortality log, in accordance with one or more embodiments of the present disclosure.
FIG. 3H illustrates a display page of a user device depicting a visitor log, in accordance with one or more embodiments of the present disclosure.
FIG. 3I illustrates a display page of a user device depicting company information, in accordance with one or more embodiments of the present disclosure.
FIG. 3J illustrates a display page of a user device depicting notifications and contacts, in accordance with one or more embodiments of the present disclosure.
FIG. 4 illustrates a flowchart of a method for verifying animal population activities, in accordance with one or more embodiments of the present disclosure.

### DETAILED DESCRIPTION

Reference will now be made in detail to the subject matter disclosed, which is illustrated in the accompanying drawings.

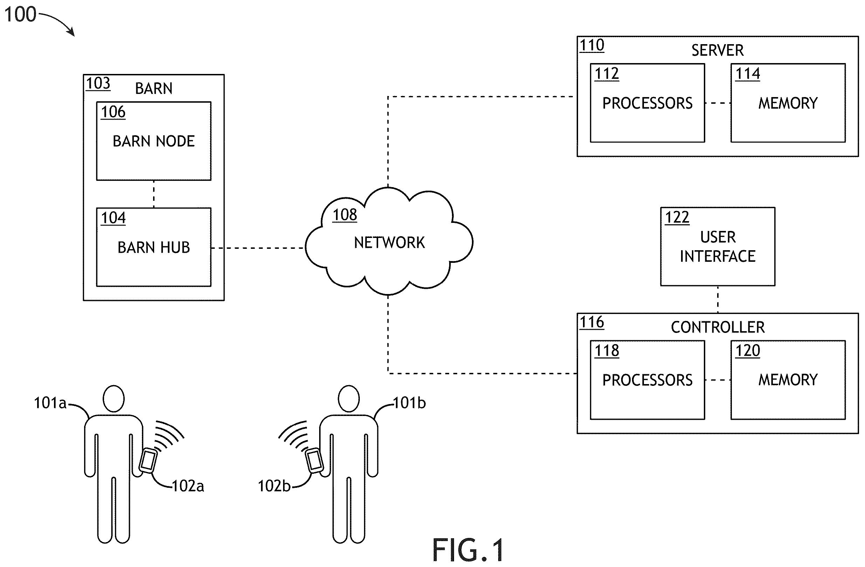

Referring generally to FIGS. 1 through 4, a system and method for animal population activity validation are shown and described, in accordance with one or more embodiments of the present disclosure.

Current systems and methods for tracking activities associated with animal populations are heavily paper-based. As such, keeping records for various farm activities may be extremely time-intensive. Animal population activities which may need to be documented and recorded may include, but are not limited to, animal feeding, injections, vaccinations, mortalities, disease outbreaks, and the like. Additionally, physical paper records may be easy to lose, and difficult to copy and/or distribute. Furthermore, manual recordkeeping may be susceptible to modified and/or falsified records. Taken together, these shortfalls result in a lack of transparency and traceability between the consumer and the producer in the animal production process.

Accordingly, embodiments of the present disclosure are directed to a system and method which cure one or more of the shortfalls of previous approaches identified above. Embodiments of the present disclosure are directed to the use of farm and ranch hardware and software which may be used to collect information regarding animal population conditions and activities. Additional embodiments of the present disclosure are directed to the use of farm and ranch hardware which may be used to collect, input, and save farmhand activities in order to validate farm activities performed on, to, or for animal populations. Additional embodiments of the present disclosure are directed to the use of blockchain technology to store and validate farm activities. It is contemplated herein that the use of blockchain technologies may allow for the system and method of the present disclosure to more efficiently and accurately collect and store farm activities, which may serve to facilitate transparency and traceability between producers and consumers in animal industries.

Consumers today have shown a desire to know where their food comes from, and what their food has been exposed to. This is especially the case with animal products. However, even if consumers are given a report outlining the details of their animal products (e.g., locations, vaccination records, feeding records, and the like), there is no way for the consumer to know that these records are complete, accurate, and devoid of any fraudulent recordkeeping. In this regard, embodiments of the present disclosure are directed to the use of farm hardware and blockchain technology to facilitate transparency between consumers and producers throughout the animal production process.

Although much of the present disclosure is described in the context of the agricultural industries, this is not to be regarded as a limitation of the present disclosure, unless noted otherwise herein. In this regard, it is contemplated herein that embodiments of the present disclosure (e.g., activity/chore validation, blockchain to facilitate transparency, and the like) may be applied to alternative and/or additional industries such as, but not limited to, manufacturing, construction, landscaping, food supply, and the like.

FIG. 1 illustrates a simplified block diagram of a system 100 for animal population activity validation, in accordance with one or more embodiments of the present disclosure. System 100 may include, but is not limited to, one or more user devices 102, one or more barns 103 including one or more barn hubs 104 and one or more barn nodes 106, a network 108, a server 110, and a controller 116.

In one embodiment, the one or more user devices 102a, 102b may correspond and/or be associated with users 101 on a farm. For example, on a farm which has implemented system 100, a first farmhand (e.g., first user 101a) may be associated with a first user device 102a, a second farmhand (e.g., second user 101b) may be associated with a second user device 102b, and the like. It is contemplated herein that each owner, employee, or other individual who frequently performs chores or otherwise interacts with animals and/or equipment on a farm may be correspond and/or be associated with a user device 102.

The user devices 102a, 102b may include any user devices known in the art including, but not limited to, cell phones, smart phones, tablets, smart watches, and the like. In one embodiment, a particular user 101a may be associated with a particular user device 102a based on the IP address or other identifying characteristic of the user device 102a. In this regard, a database may be created which associates user devices 102 to users 101 within system 100. The database of associations between users 101 and user devices 102 may be stored in memory 114, 120, which will be described in further detail herein. Users 101 associated with user devices 102 within the database may be regarded as "registered" users, whereas users 101 which are not associated with a user device 102 in the database may be regarded as "unregistered" users.

In another embodiment, user devices 102 may include, but are not limited to, a controller, a user interface, a display, and communication circuitry. The controller of user device 102 may include one or more processors and memory, wherein the one or more processors are configured to execute a set of program instructions stored in the memory, the set of program instructions configured to cause the one or more processors to carry out one or more steps of the present disclosure. It is contemplated herein that the user devices 102 may be configured to execute applications (e.g., "apps") configured to allow a user 101 (e.g., farmhand, and the like) to view, adjust, or modify one or more characteristics of system 100.

As will be described in further detail herein, the one or more user devices 102 may be configured to receive one or more inputs and/or control commands from a user. For example, the user device 102 may be configured to display a list of chores to a user 101, and the user 101 may be able to input one or more chore completion inputs indicative of a completion of one or more displayed chores of the list of chores. By way of another example, the user device 102 may be configured to receive other inputs from a user 101 including, but not limited to, mortality inputs, images, notes, and the like.

In another embodiment, system 100 may include one or more barn hubs 104. The barn hubs 104 may include, but are not limited to, a controller including one or more processors and a memory, a user interface, a display, and communication circuitry. In one embodiment, the one or more user devices 102 may be communicatively couplable to one or more barn hubs 104. The one or more user devices 102 may be communicatively coupled to the barn hub 104 using any communication mechanism or protocol known in the art.

For example, the barn hub 104 may be configured to identify the one or more user devices 102 using any wireline communication protocol (e.g., DSL-based interconnection, cable-based interconnection, T9-based interconnection, and the like) or wireless communication protocol (e.g., GSM, GPRS, CDMA, EV-DO, EDGE, WiMAX, 3G, 4G, 4G LTE, 5G, WiFi protocols, RF, LoRa, Bluetooth, and the like) known in the art. By way of another example, the one or more barn hubs 104 may be configured to identify and/or become communicatively coupled to the one or more user devices 102 via communication protocols including, but not limited to, near-field communication (NFC) protocols, light detection and ranging (LIDAR) remote sensing protocols, radio frequency identification (RFID) protocols, open-sourced radio frequencies, and the like. Accordingly, an interaction between a user 101 (e.g., user device 102) and the one or more barn hubs 104 may be determined based on one or more characteristics of the user device 102 including, but not limited to, cellular signatures, IP addresses, MAC addresses, Bluetooth signatures, radio frequency identification (RFID) tags, and the like.

In embodiments, the one or more barn hubs 104 are configured to identify a spatial relationship between the one or more barn hubs 104 and the one or more user devices 102. A spatial relationship between a barn hub 104 and a user device 102 may be identified when the user device 102 comes within a selected distance from the barn hub 104, when the user device 102 enters a pre-defined geo-fenced area, or the like.

For example, in the context of RFID, a user may be associated with an RFID tag (e.g., user device 102) which is attached or otherwise associated with the user 101. For instance, an RFID tag (e.g., user device 102) may be affixed to a name badge, ID card, or a uniform of the user 101. By way of another example, a phone of a user 101 may function as an RFID tag. The RFID tag may be encoded with identification information (e.g., serial number) which is readable by a remotely positioned RFID reader/scanner. In this example, the barn hub 104 may function as a RFID scanner configured to identify the one or more users 101 by identifying the RFID tag (user device 102) associated with the user 101. In some embodiments, RFID tags (e.g., user device 102) may function in a "passive" mode, in which case the RFID tag transmits signals including identifying information in response to interrogating signals received from the RDID scanner (e.g., barn hub 104). In additional and/or alternative embodiments, RFID tag (e.g., user device 102) may function in an "active" mode, in which case the RFID tag (e.g., barn hub 104) transmits signals including identifying information to the RFID scanner (e.g., barn hub 104) without first receiving interrogating signals.

In one embodiment, the one or more barn hubs 104 are configured to search for and identify the one or more user devices 102. In this regard, the one or more barn hubs 104 may include any transmitter or transceiver known in the art. In one embodiment, the one or more barn hubs 104 are configured to identify user devices 102 within a certain pre-defined geo-fenced area, such as a barn 103. For example, the one or more barn hubs 104 may be configured to "sniff out" IP addresses of user devices 102 which come within a hundred yards of the barn hub 104. A barn hub 104 which has identified a user device 102 within a pre-defined geo-fenced area may be said to have identified a "spatial relationship" between the barn hub 104 and the user device 102. The barn hubs 104 may be configured to actively identify user devices 102 using any identifying information of the user devices 102 including, but not limited to, IP addresses, MAC addresses, cellular signatures, Bluetooth signatures, radio frequency identification (RFID) tags, and the like. It is contemplated herein that the barn hub 104 may be configured to identify the one or more user devices 102 using any technique known in the art including, but not limited to, relative received signal strength (RSSI), signal triangulation, and the like.

In one embodiment, the one or more barn hubs 104 are configured to collect and store "identified spatial relationship data" associated with identified spatial relationships (e.g., spatial relationships between the barn hub 104 and a user device 102) in memory. For example, upon identifying a that a user device 102 is within a predefined radius/distance and/or geo-fenced area relative to the barn hub 104 (e.g., upon identifying a spatial relationship between the barn hub 104 and the user device 102), the barn hub 104 may be configured to store identified spatial relationship data associated with the spatial relationship in memory. Identified spatial relationship data may include, but is not limited to, the IP address of the user device 102, the name of the user 101 associated with the user device 102, the time the spatial relationship was identified/entered into, the duration of the spatial relationship, the time the spatial relationship was terminated, and the like. In another embodiment, when the barn hub 104 identifies a user device 102 which is not associated with a known user 101, the barn hub 104 may be configured to tag and/or store the spatial relationship as an unregistered user.

It is contemplated herein that a farm implementing system 100 may include a barn hub 104 for each barn 103 or other structure located on the farm. For example, if a farm with three barns 103 were to implement system 100, the farm may include a fist barn hub 104a located on/within the first barn 103a, a second bard hub 104b located on/within the second barn 103b, and a third barn hub 104c located on/within the third barn 103c.

It is contemplated herein that all data collected and stored by system 100 may be time-stamped. In this regard, identifying spatial relationships between barn hubs 104 and user devices 102 may allow system 100 to determine that a particular user 101 was located in a particular location (e.g., within a particular geo-fenced area) at a particular time. Accordingly, system 100 may be configured to track the movement of farmhands and employees (e.g., users 101) throughout the farm over the course of time. In another embodiment, time-stamped spatial relationship information may be stored in the memory of the user devices 102 and/or barn hubs 104.

For example, a first barn 103a may be equipped with a first barn hub 104a, and a second barn 103b may be equipped with a second barn hub 104b. The first barn hub 104a may identify a first spatial relationship with a user device 102a (e.g., smartphone) associated with a user 101a (e.g., farmhand) for a first time period. The first spatial relationship may be indicative that the user device 102a (e.g., user 101a) was located within the first barn 103a throughout the first time period. Subsequently, the second barn hub 104b may identify a spatial relationship with the user device 102a for a second time period, wherein the second spatial relationship may be indicative that the user device 102a (e.g., user 101a) was located within the second barn 103b throughout the second time period. In this example, system 100 may be configured to monitor and/or "track" the location and movements of users 101 over time.

It is noted herein that simply identifying a spatial relationship between a user device 102 and a barn hub 104 may not be sufficient to determine that a user 101 associated with the user device 102 encountered (e.g., came into contact with) a particular group of animals. For example, a barn 103 with a group of hogs may be equipped with a barn hub 104a. The barn hub 104a may be configured to identify user devices 102 which come within one-hundred feet of the barn 103. In this example, simply identifying that a user device 102a came within one-hundred feet of the barn 103 may not be sufficient for system 100 to determine that the user 101 associated with the user device 102 encountered the hogs within the barn 103. For instance, the user 101 may simply have come in close proximity with the barn 103, but not entered the barn 103.

Accordingly, in some embodiments, the system 100 may further include one or more barn nodes 106 configured to more accurately and definitively identify locations of user devices 102 at defined instances in time. In particular, the one or more barn nodes 106 may allow system 100 to verify users 101 and/or user devices 102 were present at particular locations and/or came into contact with (e.g., encountered) particular groups of animals at particular instances in time. In this regard, in some embodiments, one or more barn nodes 106 may be used to "refine," or narrow, the location of a user device 102 during an identified spatial relationship.

For the purposes of the present disclosure, the term "encounter" may be used to describe contacts and/or potential contacts between a user 101 and an animal or group of animals. It is noted herein that the ability to identify encounters between a user 101 and a group of animals may be valuable in identifying users 101 who have potentially contacted/encountered animals who have been exposed to disease outbreaks. Furthermore, identifying encounters between users 101 and animals may be used to identify users 101 who may be potential vectors for disease, and for identifying groups of animals who may be susceptible for a disease outbreak.

As shown in FIG. 1, the one or more barns 103 of system 100 may include one or more barn nodes 106 communicatively coupled to the one or more barn hubs 104. The one or more barn nodes 106 may include, but are not limited to, a controller, a user interface, a display, and communication circuitry. The one or more barn nodes 106 may be communicatively coupled to the one or more barn hubs 104 using any wireline or wireless technique known in the art including, but not limited to, DSL-based interconnection, cable-based interconnection, T9-based interconnection, GSM, GPRS, CDMA, EV-DO, EDGE, WiMAX, 3G, 4G, 4G LTE, 5G, WiFi protocols, RF, LoRa, Bluetooth, and the like.

Similar to the barn hubs 104 identifying spatial relationships between the barn hubs 104 and the user devices, the barn nodes 106 may be configured to identify interactions between a user 101/user device 102 and the barn nodes 106. In embodiments, determining a location of a user 101 and/or user device 102 may include a "two-step" verification process. In the "two-step" verification process, a barn hub 104 may identify a spatial relationship between the barn hub 104 and a user device 102, and a barn node 106 may subsequently identify an interaction between the barn node 106 and the user device 102.

The two-step verification process for identifying a location of a user 101 and/or user device 102 may be used to more reliably and efficiently determine the location of a user 101 and/or user device 102, as well as refine determined locations of the user 101 and/or user device 102. In the first step, a spatial relationship between a user device 102 and a barn hub 104 may determine a location of the user device 102 to be within a general area (e.g., within a selected radius, within a defined geo-fenced area). Subsequently, in the second step, an interaction between the user 101 and/or user device 102 may refine the determined location of the user 101/user device 102 from the general area to a location located proximate to the barn node 106 (e.g., within three feet of the barn node 106). The two-step verification process will be discussed in further detail herein.

The one or more barn nodes 106 may include any hardware device known in the art for identifying interactions between the barn nodes 106 and a user 101 and/or user device 102. For example, the one or more barn nodes 106 may include, but are not limited to, QR code scanners, capacitive touch sensors, resistive touch sensors, mechanical devices (e.g., mechanical button, mechanical lever), ID scanners, retinal scanners, fingerprint scanners, voice recognition sensors, facial recognition sensors, other biometric sensors, vehicle scanners, vehicle recognition sensors, and the like. Similarly, an interaction between a barn node 106 and a user 101 and/or user device 102 may be identified using any technique or communication protocol known in the art including, but not limited to, but not limited to, near-field communication (NFC) protocols, light detection and ranging (LIDAR) remote sensing protocols, radio frequency identification (RFID) protocols, GSM, GPRS, CDMA, EV-DO, EDGE, WiMAX, 3G, 4G, 4G LTE, 5G, WiFi protocols, radio frequency (RF), LoRa, Bluetooth, and the like.

Interactions between a barn node 106 and a user 101/user device 102 may include, but are not limited to, physical tactile interactions, communicative signal interactions, scanning QR codes, and the like. In this regard, an interaction between a user 101 (e.g., user device 102) and the one or more barn nodes 106 may be determined based on one or more characteristics of the user device 102 (e.g., QR code, ID code, RFID tag, cellular signature, IP address, Bluetooth signature) a user 101 (e.g., fingerprint, retinal characteristics, facial characteristics, voice characteristics, DNA), a vehicle (e.g., license plate, vehicle type/model), and the like.

For example, a barn node 106 may include a capacitive touch sensor. When a user 101 touches the capacitive touch sensor, the barn node 106 may be configured to identify an interaction between the user 101 and the barn node 106. This interaction may then be used to determine that the user 101 was located proximate to the barn node 106 at the time of the interaction. By way of another example, the barn node 106 may include a QR code scanner such that the barn node 106 (QR code scanner) is configured to identify an interaction between a user device 102 and the barn node 106 when a user 101 scans a bar code on the user device 102 with the barn node 106 (QR code scanner). In embodiments where the barn node 106 is fixed in a known location, the interaction (e.g., scanning the QR code on the user device 102) may then be used to determine that the user 101 was located proximate to the barn node 106 at the time of the interaction.

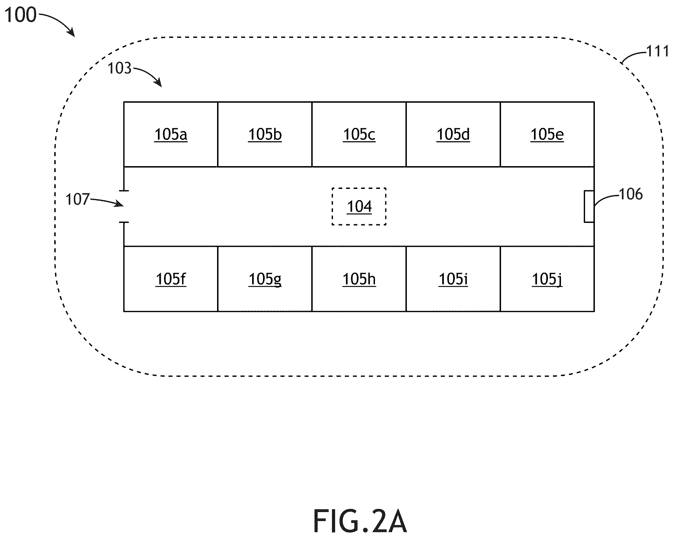

Identification of spatial relationships between a user 101/user device 102 and a barn hub 104, as well as identification of interactions between a user 101/user device 102 and a barn node 106 may be further understood with reference to FIGS. 2A-2B.

FIG. 2A illustrates a simplified aerial view of a barn 103 equipped with a system 100 for animal population activity validation, in accordance with one or more embodiments of the present disclosure. In particular, FIG. 2A illustrates one example use case for the system 100 of the present disclosure.

In the example depicted in FIG. 2A, a barn 103 located on a farm which has implemented system 100 may include a plurality of pens 105a-105j configured to store groups of hogs. The barn 103 may be equipped with a barn hub 104 and a barn node 106. In some embodiments, the barn hub 104 may be positioned on an exterior surface of the barn 103 (e.g., on top of the roof, on an exterior wall), whereas the barn node 106 may be disposed on an interior wall of the barn 103. As noted previously herein, the barn hub 104 and the barn node 106 may be communicatively coupled via a wireless and/or wireline connection.

As shown in FIG. 2A, the barn node 106 may be disposed on an interior wall of the barn 103 opposite from the entrance 107 of the barn 103. The barn node 106 may include, but is not limited to, a QR code scanner, a capacitive touch sensor, or the like. In this regard, a user 101 (e.g., farmhand) needing to register an interaction with the barn node 106 would have to enter the barn 103 via the entrance 107, traverse the length of the barn 103, and interact with the barn node 106.

A simple example of a two-step location verification may prove to be illustrative. Consider a farmhand (e.g., user 101) driving up to the barn 103, wherein the user 101 has been instructed to perform one or more chores/tasks within the barn 103 (e.g., feeding the hogs, administering vaccinations). When the user 101 drives up to the barn 103, the barn hub 104 may be configured to search for and identify a spatial relationship between the barn hub 104 and the user device 102. For instance, the barn hub 104 may be configured to identify a spatial relationship between the barn hub 104 and the user device 102 (e.g., the user 101) when the user device 102 comes within a region 111. The region 111 may be defined as a selected distance from the barn hub 104, a defined geo-fenced area, and the like. As shown in FIG. 2A, the region 111 may include the barn 103 and/or locations which are positioned outside of the barn. It is noted herein that the region 111 within which a barn hub 104 is configured to identify spatial relationships may be selectively adjusted by a user 101. In particular, a farm operator may be configured to selectively adjust the region 111 by inputting one or more control commands via a user interface 122.

Continuing with the same example, the barn hub 104 may identify a spatial relationship between the barn hub 104 and the user device 102 (user 101) when the user 101 drives up to the barn and enters the region 111. The barn hub 104 may be configured to store identified spatial relationship data in memory, wherein the identified spatial relationship data includes an initial time stamp indicating the user device 102 (e.g., the user 101) entered a spatial relationship with the barn hub 104 at a first time (*t*₁).

After parking a truck outside of the barn 103, the user 101 may then enter the barn 103 and cross to the opposite side of the barn 103 in order to interact with the barn node 106. The user 101 may then interact with the barn node 106 by scanning a QR code on the user device 102, touching a capacitive touch sensor, scanning their fingerprint, or the like. The barn node 106 may then identify an interaction between the user 101/user device 102 and the barn node 106, and transmit one or more signals to the barn hub 104 indicating that the barn node 106 identified an interaction with the user 101/user device 102 at a second time (*t*₂) subsequent to the first time (*t*₁). Identified interaction data (e.g., data associated with the identified interaction) and/or identified spatial relationship data (e.g., data associated with the identified spatial relationship) may be stored in memory of the user device 102, barn hub 104, and/or barn node 106. Identified interaction data and/or identified spatial relationship data may include, but is not limited to, time of a first interaction (e.g., time of "check-in"), time of a second interaction (e.g., time of "check-out"), length of interaction (e.g., check-out time minus check-in time), identity of user 101 in the interaction, and the like. By referencing time-stamped information associated with identified interactions, a farm owner may be able to validate the occurrence of farm activities and chores.

In this example, because the user device 102 was the only user device 102 identified to be in a spatial relationship with the barn hub 104, the barn hub 104 may be configured to determine that it must have been the user 101 who interacted with the barn node 106. Therefore, system 100 may then be configured to determine that the user 101 was present within the barn 103 at the second time (*t*₂). Furthermore, it is noted herein that placing the barn node 106a on the wall opposite from the entrance of the barn 103 requires a user 101 to walk past the group of hogs stored within the pens 105a-105j of the barn 103. In this regard, by identifying that a user 101 is present at the location of the barn node 106, system 100 may be configured to determine that the user 101 "encountered" (e.g., came into contact with), or at least potentially encountered, the group of hogs stored within the barn 103.

As shown in this example, the system 100 of the present disclosure may enable more effective location verification of users 101. Farmhands (e.g., users 101) may be instructed to touch, scan, or otherwise interact with a barn node 106 upon entering the barn 103 (e.g., "check in" with the barn node 106), perform their chores within the barn 103, then subsequently touch, scan, or otherwise interact with barn node 106 upon leaving the barn (e.g., "check out" with the barn node 106). In this regard, system 100 may be configured to determine that a user 101 was within a particular barn 103 for a certain time period based on identified interactions and spatial relationships.

The two-step location verification process may also solve issues associated with other location verification techniques. For example, a user 101 may have been tasked to perform chores within the barn 103. If the user 101 simply drives past the barn 103 within region 111 to initiate a spatial relationship with the barn hub 104, the lack of interactions with the barn node 106 may indicate that the user 101 did not actually enter the barn 103 to perform the chores. By way of another example, the user 101 may enter a spatial relationship with the barn hub 104, enter the barn 103 to interact with the barn node 106, but then immediately leave without performing the chores. In this example, the system 100 may be configured to identify that the user 101 did not "check out" after performing chores, and that the user 101 was not within the region 111 for sufficient time to properly perform the chores. As will be discussed in further detail herein, cross-referencing identified spatial relationship data, identified interaction data, and identified chore completion inputs may be used to identify whether users 101 completed chores properly.

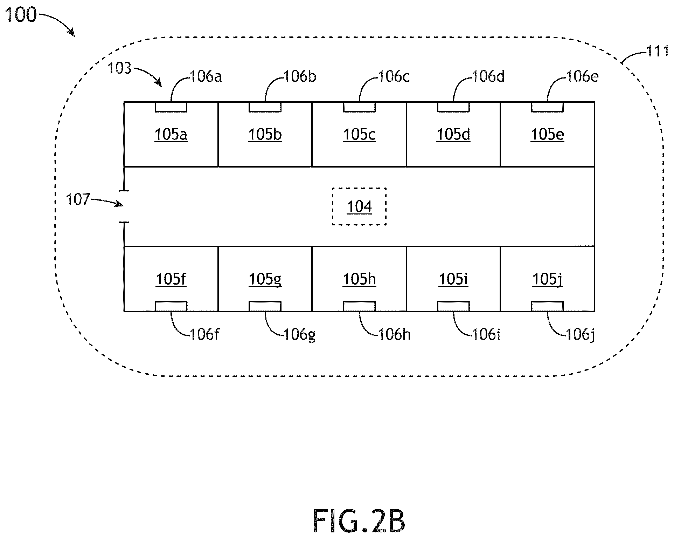

FIG. 2B illustrates a simplified aerial view of a barn 103 equipped with a system 100 for animal population activity validation, in accordance with one or more embodiments of the present disclosure. In particular, FIG. 2B illustrates one example use case for the system 100 of the present disclosure.

Another example may prove to be illustrative. In this example, as shown in FIG. 2B, a barn 103 located on a farm which has implemented system 100 may include a plurality of pens 105a-105j, wherein each pen 105a-105j is configured to store a group of hogs. The barn 103 may be equipped with a barn hub 104 and a plurality of barn nodes 106a-106j. A barn node 106 may be disposed within each respective pen 105a-105j. In some embodiments, the barn hub 104 may be positioned on an exterior surface of the barn 103 (e.g., on top of the roof, on an exterior wall). As noted previously herein, the barn hub 104 and the barn node 106 may be communicatively coupled via a wireless and/or wireline connection.

In this example, the plurality of barn nodes 106a-106j may be configured to identify interactions with each respective barn node 106a-106j within each respective pen 105a-105j. In this regard, identifying interactions between a user 101/user device 102 at each respective barn node 106a-106j may thereby determine which rooms/pens 105a-105j of a barn 103 a user 101 is located in at particular times. In this example, a first identified interaction between the user 101/user device 102 and the first barn node 106a may indicate the user 101 was present within the first pen at a first time, a second identified interaction between the user 101/user device 102 and the second barn node 106a may indicate the user 101 was present within the second pen 105b at a second time, and the like.

By instructing farmhands (users 101) to touch, scan, or otherwise interact with each barn node 106a-106j as they perform their chores in each of the pens 105a-105j of the barn 103, a farm operator may be able to verify that the farmhand performed chores within (or at least was present within) each respective pen 105a-105j.

In addition to identifying interactions between the barn nodes 106 and users 101/user devices 102, the one or more barn nodes 106 may be configured to collect data. In this regard, the one or more barn nodes 106 may include one or more sensors configured to collect sensor readings of various characteristics including, but not limited to, surrounding temperatures, surrounding pressures, surrounding humidity, noise levels, carbon monoxide (*CO*) concentrations, carbon dioxide (*CO*₂) concentrations, and the like. Accordingly, the one or more sensors of the barn nodes 106 may include, but are not limited to, temperature sensors, pressure sensors, humidity sensors, composition sensors, ultrasonic sensors, LIDAR sensors, movement sensors, LIDAR sensors, and the like. By way of another example, the one or more barn nodes 106 may be coupled to one or more mechanical or agricultural devices. In this regard, the one or more barn nodes 106 may be configured to collect data regarding feed rates, watering rates, and the like. The data collected by barn nodes 106 (e.g., sensor readings) may be time-stamped and stored in memory of the barn node 106 and/or barn hub 104.

In additional and/or alternative embodiments, the one or more barn nodes 106 may include one or more imaging devices including, but not limited to, cameras, video cameras, thermal imaging devices, and the like. It is contemplated herein that imaging devices may be used to collect video and/or images of equipment, users 101, farm facilities (e.g., barns), and animals, which may be processed by system 100 to provide owners/users with valuable information. For instance, one or more imaging devices may be used to determine dwell time within production areas inside barns, as well as identify and validate the identities and times of users 101 and/or vehicles which are present within particular areas of a farm which has implemented system 100.

By way of another example, barn nodes 106 including imaging devices may be used to collect images of groups of animals and/or users. Acquired images may then be transmitted to the server 110 and/or controller 116 to be processed via facial recognition software/algorithms executed by the one or more processors 112, 118. The one or more processors 112, 118 may be configured to carry out facial recognition via one or more machine learning algorithms in order to identify individual animals and/or users, verify the location of individual animals and/or users at points in time, and the like. F

By way of another example, one or more imaging sources may be used to collect images/video of animals in order to monitor particular characteristics of the animals including, but not limited to, size, behavioral characteristics, health, and the like. Images/video of animals may be transmitted from the barn node 106 to the barn hub 104, server 110, and/or controller 116 such that they may be processed by the one or more processors 112, 118. The one or more processors 112, 118 may be configured to identify one or more characteristics of a group of animals based on acquired images. For example, images/video of one or more animals may be transmitted from the barn nodes 106 to the server 110 and/or controller 116 such that behavioral patterns of the one or more animals may be processed and/or learned. By way of another example, acquired images/video of the one or more animals may be processed to identify and flag animals which are exhibiting abnormal behavioral characteristics, which may be indicative of a disease or a deteriorating health state.

It is noted herein that characteristics of users 101, animals, groups of animals, and/or barns 103a may be determined using machine learning techniques. For example, acquired images of a group of animals may be used to generate a machine learning classifier. Subsequently, the machine learning classifier may be configured to receive acquired images of the group of animals, and identify one or more characteristics of the group of animals. Machine learning classifiers may be trained via supervised and/or unsupervised techniques. Further, the machine learning classifier may include any machine learning classifier known in the art including, but not limited to, a conditional generative adversarial network (CGAN), a convolutional neural network (CNN) (e.g., GoogleNet, AlexNet, and the like), an ensemble learning classifier, a random forest classifier, artificial neural network (ANN), and the like. Characteristics of animals which may be determined via machine learning techniques may include, but are not limited to, behavioral characteristics, health status, animal identity, and the like.

In another embodiment, the one or more barn hubs 104 may be directly or indirectly coupled to a server 110 and a controller 116 via a network 108. In this regard, the one or more barn hubs 104 may include network interface circuitry. It is noted that network interface circuitry (not shown) of barn hub 104 may include any network interface device suitable for interfacing with network 108. For example, the network interface circuitry may include wireline-based interface devices (e.g., DSL-based interconnection, cable-based interconnection, T9-based interconnection, and the like). In another embodiment, the network interface circuitry may include a wireless-based interface device employing GSM, GPRS, CDMA, EV-DO, EDGE, WiMAX, 3G, 4G, 4G LTE, 5G, WiFi protocols, RF, LoRa, and the like. The network 108 may be configured to receive data from the one or more barn hubs 104, and may include any wireless and/or wireline network protocol known in the art. For example, the network 108 may include, but is not limited to, an internet or an intranet (e.g., LAN, WLAN and the like).

In another embodiment, the one or more barn hubs 104 may be configured to transmit signals to the server 110 and controller 116 via network 108, wherein the signals include data stored in the memory of the one or more barn hubs 104, barn nodes 106, or user devices 102. For example, data transmitted to the server 110 and/or controller 116 may include, but is not limited to, received chore completion inputs, identified spatial relationship data, identified interaction data, collected sensor readings, acquired images, and the like. For instance, the server 110 and controller 116 may be configured to receive one or more signals, wherein the one or more signals include registered user 101 information (e.g., database of users 101 associated with user devices 102), time-stamped spatial relationship information, time-stamped interaction information, information collected sensors of the barn nodes 106, images collected by the barn nodes 106, and the like.

As noted previously herein, the one or more ban hubs 104 may be directly or indirectly communicatively coupled to network 108. In this regard, the one or more ban hubs 104 may be communicatively coupled to one or more devices, which may then be directly or indirectly communicatively coupled to network 108. For example, a farm may include a first barn hub 104a, a second barn hub 104b, and a third barn hub 104c. The first barn hub 104a, the second barn hub 104b, and the third barn hub 104c may be communicatively coupled to an intermediate device, wherein the intermediate device is communicatively coupled to the network 108. In this example, the intermediate device may be configured to receive data/information from the first barn hub 104a, the second barn hub 104b, and the third barn hub 104c and transmit the received data to network 108. By way of another example, a plurality of barn hubs 104 may be communicatively coupled to one another, such that data may be transmitted between the plurality of barn hubs 104 and to the network 108 via one or more barn hubs 104 of the plurality of barn hubs 104.

In another embodiment, system 100 includes a server 110 including one or more processors 112 and memory 114. In another embodiment, server 110 is communicatively coupled to the one or more barn hubs 104 via network 108. In this regard, the server 110 may include a network interface device (not shown) suitable for interfacing with network 108. The network interface device may include any network interface device known in the art. For instance, the network interface devices may include wireline-based interface devices (e.g., DSL-based interconnection, Cable-based interconnection, T9-based interconnection, and the like). In another instance, the network interface devices may include a wireless-based interface device employing GSM, GPRS, CDMA, EV-DO, EDGE, WiMAX, 3G, 4G, 4G LTE, 5G, Wi-fi protocols, and the like.

By way of another example, server 110 may include a cloud-based architecture. For instance, it is contemplated herein that the server 110 may include a hosted server and/or cloud computing platform including, but not limited to, Amazon Web Services (e.g., Amazon EC2, and the like). In this regard, system 100 may include a software as a service (SaaS) configuration, in which various functions or steps of the present disclosure are carried out by a remote server.

In another embodiment, system 100 may include a controller 116. The controller 116 may include one or more processors 118 and memory 120. In another embodiment, the controller 116 may be communicatively coupled to a user interface 122. In one embodiment, the user interface 122 includes a display used to display data of the system 100 to a user. The display of the user interface 122 may include any display known in the art. For example, the display may include, but is not limited to, CRT display, a liquid crystal display (LCD), a light-emitting diode (LED) display, an organic light-emitting diode (OLED) based display, or the like. Those skilled in the art should recognize that any display device capable of integration with a user interface 122 is suitable for implementation in the present disclosure. In another embodiment, a user may input selections and/or instructions responsive to data displayed to the user via the user interface 122.

In another embodiment, the controller 116 may include, but is not limited to, one or more desktops, laptops, tablets, smartphones, smart watches, or the like. In one embodiment, a user may use the user interface 122 in order to view identified spatial relationship data, identified interaction data, chore completion inputs, and other information generated/received by system 100 stored in memory 120 of controller 116. For example, a farm owner may desire to verify that all the chores on the farm had been performed the previous day. Using a computer or smart phone (e.g., user interface 122), the farm owner could review all the data stored in memory 114 to determine that the stored transactions indicate all the chores had been completed. In this regard, it is contemplated that a farm owner or manager may use the user interface 122 to view data generated and stored by system 100, as well as modify one or more characteristics of system 100.

It is noted herein that a single electronics device (e.g., a cell phone, tablet, smart watch, and the like) may serve both as a user device 102 and as a controller 116. For example, a farm owner may have a smartphone which acts as a user device 102 within system 100. Additionally, the smartphone may serve as a controller 116 with which the farm owner may view data generated/stored by system 100.

In one embodiment, one or more processors 112 of server 110 are configured to execute a set of program instructions stored in memory 114. In one embodiment, the one or more processors 112 are configured to carry out one or more steps of the present disclosure. For example, the one or more processors 112 may be configured to: receive one or more signals from the barn hub 104, the one or more signals including the one or more chore completion inputs, the identified interaction data, and identified spatial relationship data associated with the identified spatial relationship; store the list of chores in the memory 114; store a transaction log in the memory 114, the transaction log including the chore completion inputs, the identified interaction data, and the spatial relationship data; and identify one or more incomplete chores of the list of chores based on at least one of the one or more chore completion inputs, the identified interaction data, and the identified spatial relationship data. Each of these steps/functions will be addressed in turn.

In one embodiment, the one or more processors 112 are configured to cause the server 110 to receive data from the one or more barn hubs 104. For example, the server 110 may be configured to receive one or more signals from the barn hub 104, wherein the one or more signals include chore completion inputs received by a user device 102, identified spatial relationship data, and identified interaction data. In this regard, data received from the one or more barn hubs 104 may include time-stamped data regarding identified spatial relationships (e.g., initial spatial relationship time, ending spatial relationship time, duration of spatial relationship) and/or identified interactions (e.g., time of identified interactions, time between "check in" and "check out" interactions). Data received from the one or more barn hubs 104 may also include identifying characteristics of the one or more users 101 and/or user devices 102 associated with identified spatial relationships and/or identified interactions including, but not limited to, user device 102 IP address, user device 102 MAC address, name of user 101, and the like. Data received from the one or more barn hubs 104 may further include time-stamped data collected by the one or more barn nodes 106 including, but not limited to, temperature data, pressure data, feed rate sensor data, watering rate sensor data, acquired images, and the like. All data received by the server 110 may be stored in memory 114 and time-stamped.

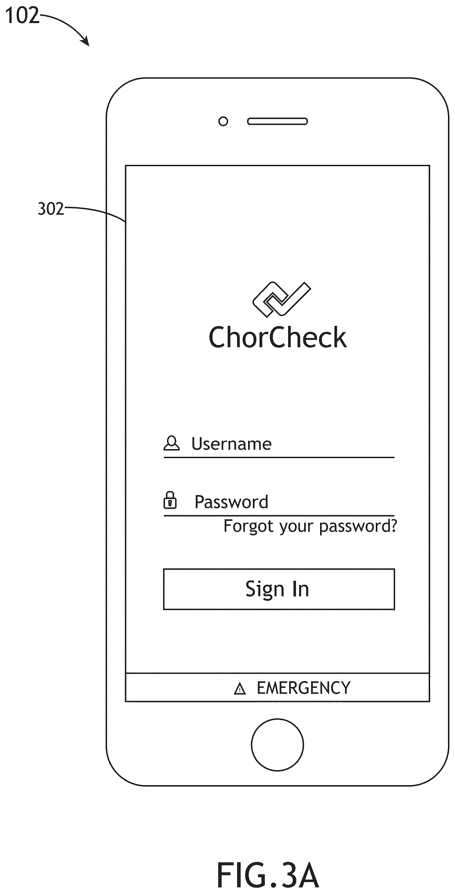

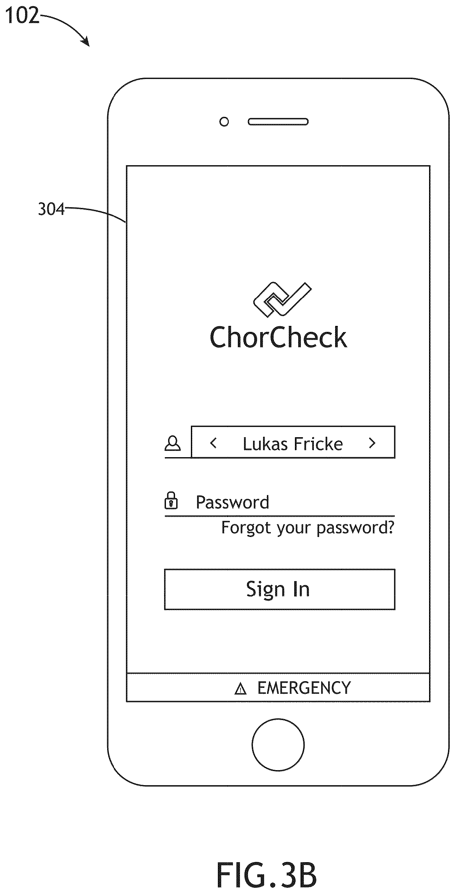

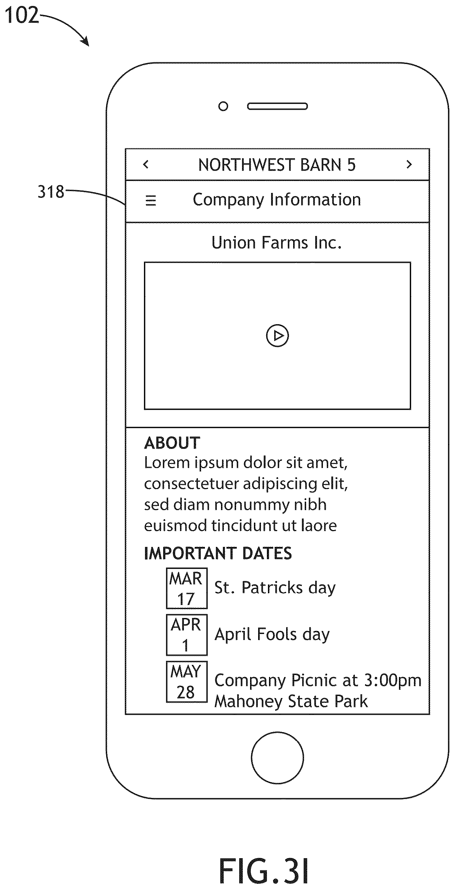

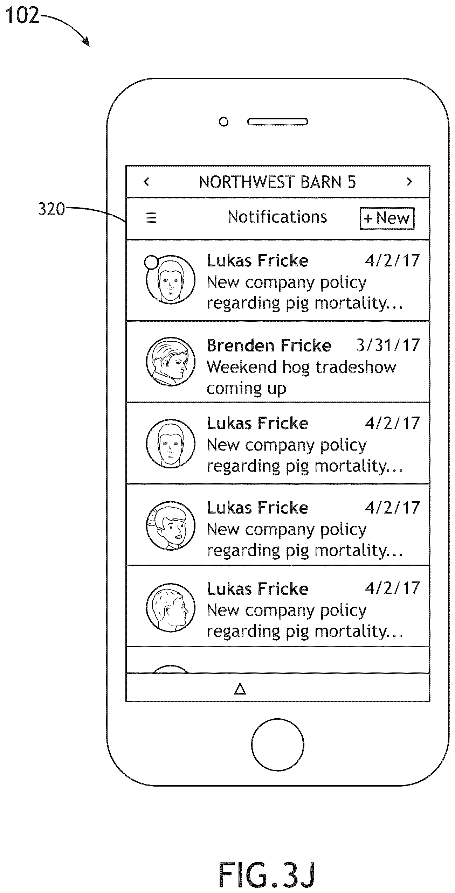

The server 110 and/or controller 116 may be configured to store a list of chores in memory 114, 120. The list of chores may include one or more chores which are to be completed. The list of chores may be organized according to the location of each chore. For example, server 110 may be configured to store a list of chores to be completed in Barn #1 (barn 103a), such that the list of chores may be associated with spatial relationships including barn 103a. It is noted herein that the list of chores may be generated and/or edited by a user via the user interface 122. This may be further understood with reference to FIGS. 3A-3D.

FIGS. 3A-3J illustrate display pages of a user device 102, in accordance with one or more embodiments of the present disclosure. As noted previously herein, user device 102 may be configured to include and/or execute an application ("app") which may allow a user 101 to view, modify, and adjust one or more characteristics of system 100. Accordingly, the display pages illustrated in FIGS. 3A-3J may depict display screens associated with the application located on user device 102.

FIGS. 3A-3B illustrate display pages 302, 304 of a user device 102 depicting a login page, in accordance with one or more embodiments of the present disclosure. As shown in FIG. 3A, the app may open up to a login page prompting a user 101 to sign in by entering a username and a password.

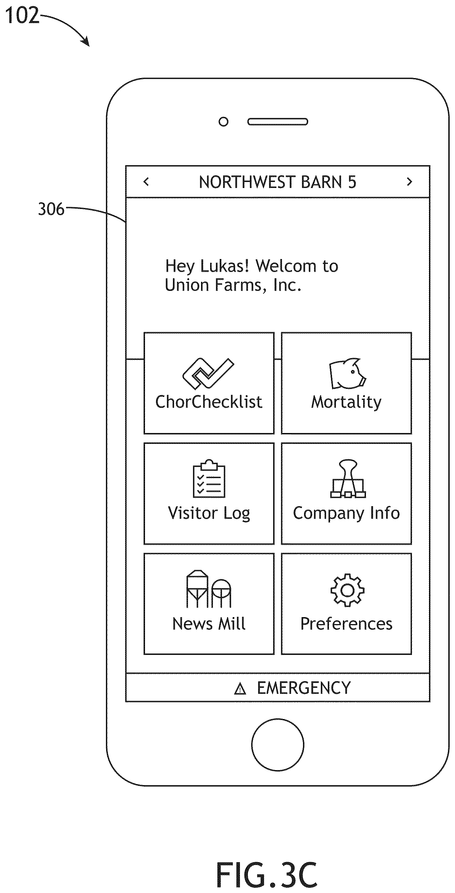

FIG. 3C illustrates a display page 306 of a user device 102 depicting selectable options of an application, in accordance with one or more embodiments of the present disclosure. In one embodiment, when the user 101 approaches and/or enters a barn equipped with a barn hub 104, the barn hub 104 may identify a spatial relationship between the barn hub 104 and the user device 102, thereby determining that the user 101 is near/within the barn. For example, as shown in FIG. 3C, the system 100 may identify that the user 101 is within the "Northwest Barn 5" and display this location at the top of display page 306.

As shown in display page 306, once the system 100 has identified a spatial relationship between the user device 102 and a barn hub 104 such that the location of the user device 102 is known, the display page 306 may present options associated with the location of the user 101 (e.g., Northwest Barn 5). For example, selection of the "ChorCheklist" button may cause the user device 102 to display a list of activities (e.g., list of chores) which are scheduled to be performed in the current location (e.g., Northwest Barn 5). In this regard, the user device 102 may be configured to display a list of chores associated with the identified spatial relationship. By way of another example, selection of the "Mortality" button may cause the user device 102 to display a screen which may allow a user 101 to enter mortality inputs and record data associated with the mortality input including, but not limited to, the location of the discovered dead animal, animal ID, time, date, weight, observations, and the like. These embodiments will be discussed in further detail herein.

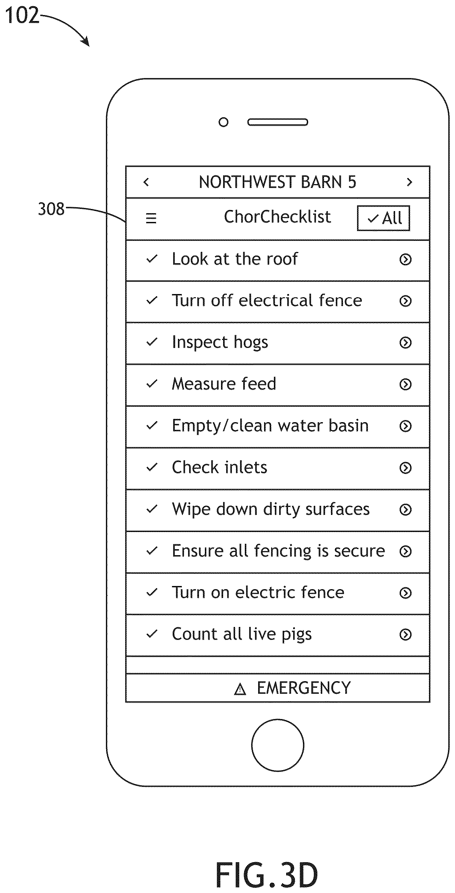

FIG. 3D illustrates a display page 308 of a user device 102 depicting an activity/chore checklist, in accordance with one or more embodiments of the present disclosure. As shown in FIG. 3D, following a user 101 selection of the "ChorChecklist" button shown on display page 306., the user device 102 may show display page 308. Display page 308 may illustrate a list of chores or activities which are to be performed in the current location of the user device 102 (e.g., current location of the user 101). The list of chores displayed may be a list of chores which are associated with a particular spatial relationship and/or interaction between a user 101 and barn node 106. For example, if an interaction is identified between the user 101 and a barn node 106 located in the Northwest Barn 5, the list of chores may include chores which are to be completed within the Northwest Barn 5. For instance, as shown in display page 308, the list of activities/chores to be performed within the Northwest Barn 5 may include looking at the roof, turning off the electrical fence, inspecting the hogs, measuring the feed, and the like. For the purposes of the present disclosure, the terms "activity" and "chore" may be used interchangeably, unless noted otherwise herein.

In one embodiment, as shown in FIG. 3D, a user 101 may be able to select and/or "check off" chores shown on display page 308 by inputting one or more chore completion inputs via the user device 102, thereby indicating that the user 101 has performed/completed the respective chore. In this regard, the one or more user devices 102 may be configured to receive chore completion inputs from a user 101. A chore completion input may indicate that a chore has been completed. In one embodiment, a user 101 may not be able to "check off" or otherwise input a chore completion input unless the user 101 (and respective user device 102) is proximate to the location which the chore is to be performed. For example, if a group of hogs are located within the Northwest Barn 5, the chore "inspect the hogs" may not be "checked off" (e.g., a chore completion input may not be submitted) unless the user 101 (and user device 102) are located within the Northwest Barn 5. In this regard, it is contemplated herein that system 100 may facilitate a certain degree of accountability and/or verification among employees (e.g., users 101) of a farm.

The server 110 and/or controller 116 may be further configured to store a transaction log in memory 114, 120, wherein the transaction log includes data received by the one or more barn hubs 104. For example, the server 110 may be configured to receive one or more chore completion inputs, identified spatial relationship data, and identified interaction data from the barn hub 104, and store this data in a transaction log. In additional and/or alternative embodiments, the server 110 may be configured to store the transaction log on the blockchain.

In another embodiment, the one or more processors 112 may be configured to validate farm activities/chores. In this regard, the server 110 and/or controller 116 may be configured to identify one or more incomplete chores and/or one or more complete chores. The server 110 may be configured to identify incomplete chores and/or complete chores based on received chore completion inputs, identified spatial relationship data, and identified interaction data.

It is noted herein that, for the purposes of the present disclosure, the terms "incomplete chore" and "complete chore" need not refer to chores which were completed or not completed in actuality. Rather, the terms "incomplete chore" and "complete chore" may be used to refer to chores which, based on the data collected by system 100, may be identified or flagged as completed or incomplete. In this regard, the terms "incomplete chore" and "complete chore" may include determinations by the system 100 as to whether it was likely a chore was completed or not, based on the data collected by the system 100. Accordingly, it is noted herein that while the "incomplete chore" and "complete chore" designations of the present disclosure may not be perfect in actuality, they may facilitate transparency and traceability in the farming/ranching context, and may provide farm owners with data indicating the likelihood that required chores were completed properly.

It is noted herein that the server 110 may be configured to identify complete and/or incomplete chores by cross-referencing data within the transaction log (e.g., chore completion inputs, identified spatial relationship data, identified interaction data). For example, the server 110 may be configured to identify one or more complete chores by determining that one or more chore completion inputs were received by the user device 102 during a time interval of the related spatial relationship. For instance, if one or more chore completion inputs for chores within Barn #1 (barn 103a) were received by a user device 102 when the user device 102 was in a spatial relationship with a barn hub 104 of the barn 103a, the server 110 may be configured to identify the chores as complete chores. Conversely, the server 110 may be configured to identify one or more incomplete chores by determining that one or more chore completion inputs were not received by the user device 102 during a time interval of the related spatial relationship. For instance, if one or more chore completion inputs for chores within Barn #1 (barn 103a) were received by a user device 102 when the user device 102 was not in a spatial relationship with a barn hub 104 of the barn 103a, the server 110 may be configured to identify the chores as incomplete chores.

By way of another example, the server 110 may be configured to identify one or more incomplete chores based on the absence of a chore completion input, based on the absence of an identified spatial relationship, and/or based on the absence of an identified interaction. By way of another example, the server 110 may be configured to identify one or more incomplete chores by comparing identified spatial relationship data and/or identified interaction data to data stored in memory 114, 120. For instance, average time durations required to complete each respective chore may be stored along with each chore of the list of chores in memory 114, 120. By comparing the duration of identified spatial relationships and/or identified interactions to average time durations for the respective chores, the server 110 may be configured to determine that chores marked as "complete" could not have been completed properly in the identified time, as indicated by identified spatial relationship data.

For instance, the total average duration for a list of chores within barn 103a may be approximately two hours. In this example, if identified spatial relationship data indicates a user device 102 was only within a spatial relationship with a barn hub 104 of the barn 103a for ten minutes, the server 110 may be configured to identify each chore of the list of chores to be completed within barn 103a as incomplete chores.

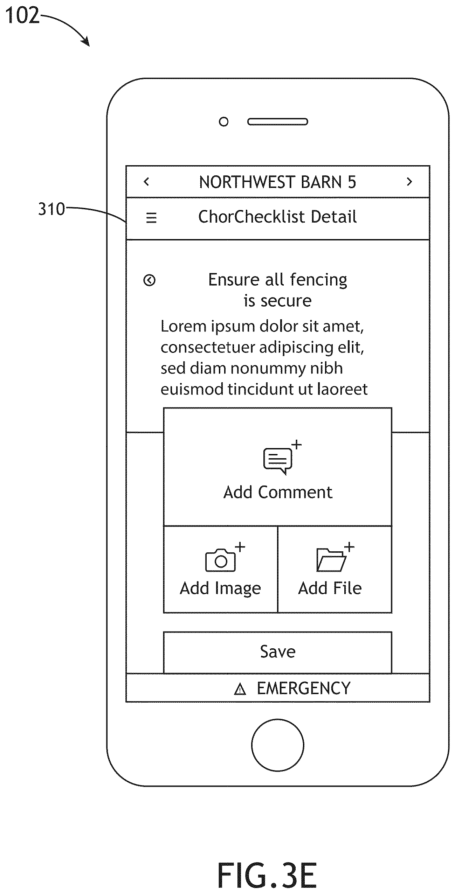

In another embodiment, the server 110 may be configured to receive additional data related to chores and/or spatial relationships from a user device 102 via a barn hub 104. Additional data received by the user device 102/barn hub 104 may be stored in memory 114, 120. This may be further understood with reference to FIGS. 3E-3F.

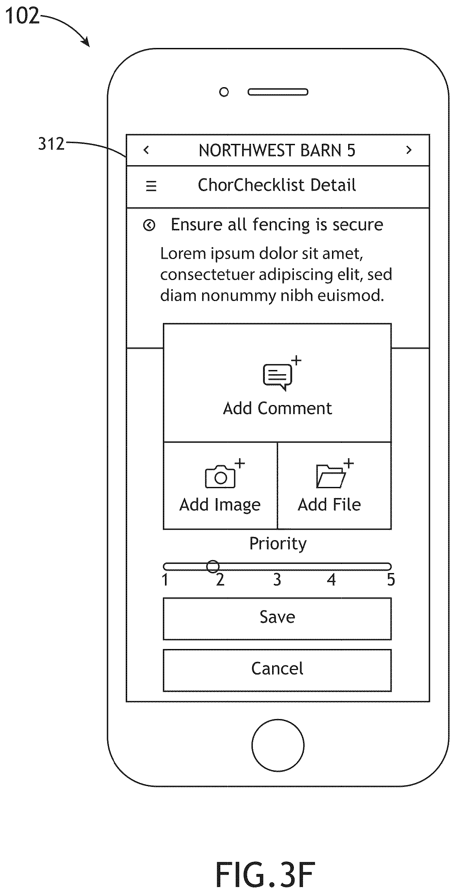

FIGS. 3E and 3F illustrate display pages 310, 312 of a user device 102 depicting details of a selected chore, in accordance with one or more embodiments of the present disclosure. As shown in display pages 310, 312, after selecting a chore of the list of chores displayed on display page 308, a user 101 may be able to view, select, modify, and/or add data associated with the particular selected chore. For example, upon selecting the chore "ensure all fencing is secure," a user 101 may be able to read a description and/or instructions associated with the chore, add a comment, add images, add files, and the like. By way of another example, a user 101 may be able to set a priority level for the activity, flag the chore as incomplete, or flag the chore for another user 101 to complete. The user may then be prompted to save or cancel changes made to the chore.

In another embodiment, the one or more processors 112 may be configured to identify a completed list of chores as a single "positive transaction." For example, FIG. 3D illustrates a list of chores to be completed in the Northwest Barn 5. Employees may be expected to complete each of the chores in the list illustrated in FIG. 3D on a daily basis (or other timeframe). Thus, the entire list of chores is expected to be completed, and is likely to be completed, on a daily basis. In order to cut down on repetitive data entries which may state that each of the individual chores was completed, a completed list of chores may be stored as a single "positive transaction." For instance, the processors 112 may receive chore completion inputs indicating that each of the chores in the chore list depicted in FIG. 3D was completed. Instead of storing each of the chores as a separate data entry (e.g., "Chore 1: complete; Chore 2: complete; Chore 3: complete, etc.), which may result in repetitive data, the one or more processors 112 may be configured to identify and store in memory 114 the entire completed chore list as a single "positive transaction."

Conversely, in another embodiment, the or more processors 112 may be configured to identify an individual incomplete chore as a single "negative transaction." For instance, the processors 112 may receive data indicating that one of the chores listed in the chore list depicted in FIG. 3D was not completed. For example, if the list of chores includes five chores, and the user 101 input chore completion inputs via the user device 102 for only four of the five chores, the one or more processors 112 may be configured to determine that the one chore of the list of chores was not completed. Instead of storing each of the chores as a separate data entry (e.g., "Chore 1: complete; Chore 2: incomplete; Chore 3: complete, etc.), the one or more processors 112 may be configured to identify and store in memory 114 a single "negative transaction" indicating that an individual chore was not completed.

In this regard, completed chore lists may be stored as a single positive transaction, and individual incomplete chores may be stored as single negative transactions. By way of another example, the one or more processors 112 may be configured to store a first incomplete chore as a first negative transaction, and second incomplete chore as a second negative transaction. Conversely, the one or more processors 112 may be configured to store a completed list of chores as a single positive transaction. It is noted herein that storing completed chore lists and individual incomplete chores as individual transactions may allow system 100 to cut down on stored data, while allowing for a user to more effectively and efficiently search for important data (e.g., that all chores were completed, or that a chore was missed).

Generally speaking, the terms "positive transaction" and "negative transaction," as used herein, may constitute different methods of organizing and grouping a transaction log. In this regard, the term "transaction log" may be regarded as referring to a list or other database of transactions identified and saved by the system 100 of the present disclosure. For example, a transaction log may include a list of each chore to be completed within system 100. The transaction log may also include identified spatial relationship data, identified interaction data, and information associated with each chore/activity including, but not limited to, whether the chore was completed, the time the chore was completed (chore completion inputs), identity of the user 101 who completed the chore, and the like.

In additional and/or alternative embodiments, the one or more processors 112 of the server 110 may be configured to "track" animals, or groups of animals, within a farm/ranch and/or between farms/ranches throughout the course of the animal's lifetime. In this regard, system 100 may be used to track animals, or groups of animals, from birth until the animals are processed. For example, a group of hogs may be born on a first farm which has implemented system 100. Each hog may be assigned a unique identifier and may be stored in pen 105a. Unique identifiers associated with each hog and the location of the group of hogs (pen 105a) may be stored in memory 114, 120. While raising the group of hogs, chore completion inputs, identified spatial relationship data, and identified interaction data associated with the pen 105a and the group of hogs may be stored in memory 114, 120. In this regard, vaccination records, injection records, feeding/watering records, and the like, may be associated with the group of hogs and stored in memory 114, 120. Further, data associated with the group of hogs may be stored on the blockchain.

Continuing with the same example, the group of hogs may be transported from the first farm to a second farm which has implemented system 100. A user 101 may input, via user interface 122, that the group of hogs in pen 105a were transferred by a truck to a pen 105b located on the second farm. In this regard, the server 110 may be configured to track and store in memory the location of the group of hogs throughout their lifecycle. In this regard, the server 110 may be configured to facilitate transparency and traceability in the farming/ranching context. In particular, by storing the location and caretaking records of the group of hogs on the blockchain, end-users may be able to learn the historical location, feeding records, and injection records of their products.

In another embodiment, the one or more processors 112 may be configured to identify encounters between users 101 and one or more groups of animals based on identified spatial relationship data and/or identified interaction data. In particular, tracking the movements of users 101 throughout system 100 may be used to identify users 101 which have interacted with, or been exposed to, particular animal populations. For example, as noted previously herein with respect to FIG. 2A, if a user 101 must walk past groups of animals to interact with the barn node 106 disposed on an interior wall of the barn 103, the one or more processors 112 of the server 110 may be configured to determine that the user 101 potentially came into contact with, or encountered, the groups of animals within the barn 103. By way of another example, if the server 110 identifies a user 101 completed one or more chores associated with a group of animals, the server 110 may be further configured to determine that the user 101 encountered the group of animals.

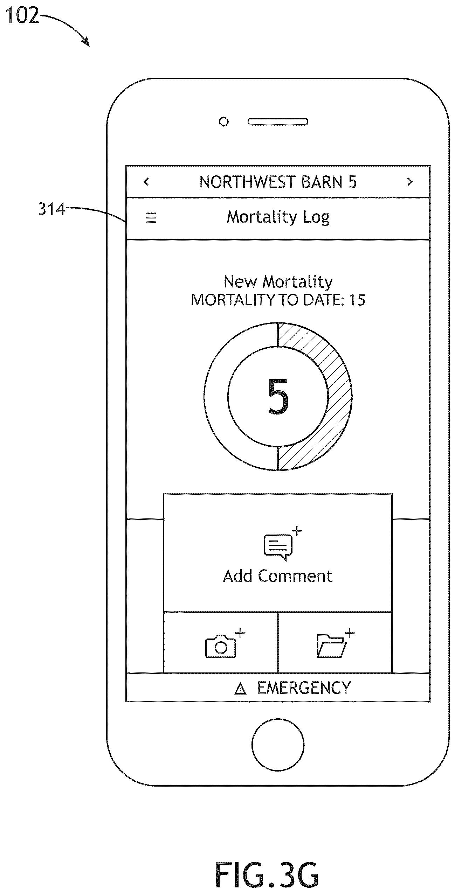

In another embodiment, the one or more processors 112 may be configured to receive one or more mortality inputs input via a user device 102 via the barn hub 104. For example, as shown in FIG. 3C, a user 101 may be able to select the "Mortality" button illustrated in display page 306. Selection of the "Mortality" button in FIG. 3C may cause the user device 102 to show display page 314 illustrated in FIG. 3G. In particular, FIG. 3G illustrates a display page 314 of a user device 102 depicting an animal mortality log, in accordance with one or more embodiments of the present disclosure.

In one embodiment, a user 101 may be able to document and log discovered dead animals in display page 314. In this regard, the one or more user devices 102 may be configured to receive one or more mortality inputs from a user 101, wherein the one or more mortality inputs indicate one or more dead animals. The display page 314 may depict the number of animals that have died in the particular location to date. When documenting discovered dead animals, a display page 314 may allow a user to add comments, add pictures, add files, and the like. The display page 314 may also allow a user 101 to input other information associated with the mortality inputs including, but not limited to, the weight of the animal, details of the death, location of the death, animal ID number, and the like. Furthermore, it is contemplated herein that display page 414 may further display available and/or preferred disposal/euthanasia methods, as well as instructions for carrying out a selected disposal/euthanasia method. Received mortality inputs and information regarding received mortality inputs may be added to the transaction log and stored in memory 114, 120.

In another embodiment, the one or more processors 112 may be configured to identify potential disease outbreaks based on the received mortality inputs. For example, upon receiving two or more mortality inputs from a single barn 103, the one or more processors 112 may be configured to identify a potential disease outbreak in the barn 103.

In another embodiment, the one or more processors 112 may be configured to identify one or more users 101 which may be vectors for the spread of disease. For example, the one or more processors 112 may be configured to identify which users 101 have been exposed to animals susceptible to the potential outbreak, and identify the one or more users 101 as potential vectors for the spread of disease/outbreak. By way of another example, the one or more processors 112 may be configured to determine, based on identified spatial relationship data and identified interaction data received from barn hubs 104, where users 101 have been, what animals (or groups of animals) they have been in contact with (e.g., encounters), and the like. This information may prove to be invaluable in tracking and/or preventing the spread of diseases, such as foot and mouth disease (FMD).

For instance, throughout the course of a day, a user 101a may have performed activities in barn #1 (barn 103a), barn #3 (barn 103c), and barn #5 (barn 103e), respectively. Interactions between barn nodes 106 in each of the barn 103 and the user 101a may have been identified to confirm the presence of the user 101 in each of the barns 103. Based on the identified interactions, the one or more processors 112 may be configured to identify a first encounter between the user 101 and a group of animals in barn #1 (barn 103a), a second encounter between the user 101 and a group of animals in barn #3 (barn 103c), and a third encounter between the user 101 and a group of animals in barn #5 (barn 103e). If a disease outbreak is subsequently identified in barn #3 (barn 103c), the one or more processors 112 may be configured to identify user 101a as a potential vector for the spread of disease.

In another embodiment, the one or more processors 112 may be configured to identify one or more groups of animals which may be at risk for a disease outbreak. For example, continuing with the example above, upon identifying user 101 as a potential vector for disease based on identified encounters, the one or more processors 112 may be further configured to identify that the disease may have been spread to barn #5 by user 101 traveling from barn #3 (e.g., the location of the outbreak) to barn #5. Thus, the one or more processors 112 may be configured to identify animals in barn #5 (barn 103e) as being at risk for contracting the disease since the user 101 traveled to barn #5 after encountering the animals in barn #3 (barn 103c) which suffered from the disease outbreak.

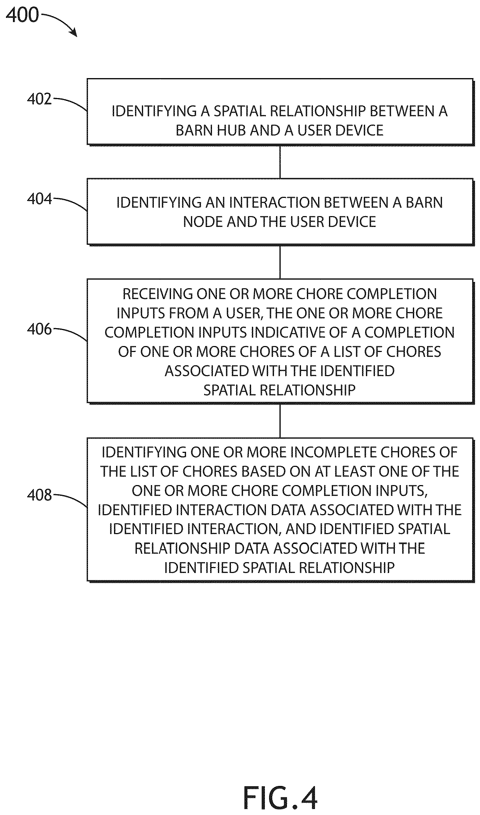

In addition to being able to identify users 101 as potential vectors for disease, system 100 may further be capable of identifying visitors as potential vectors for disease. This may be further understood with reference to FIG. 4H.

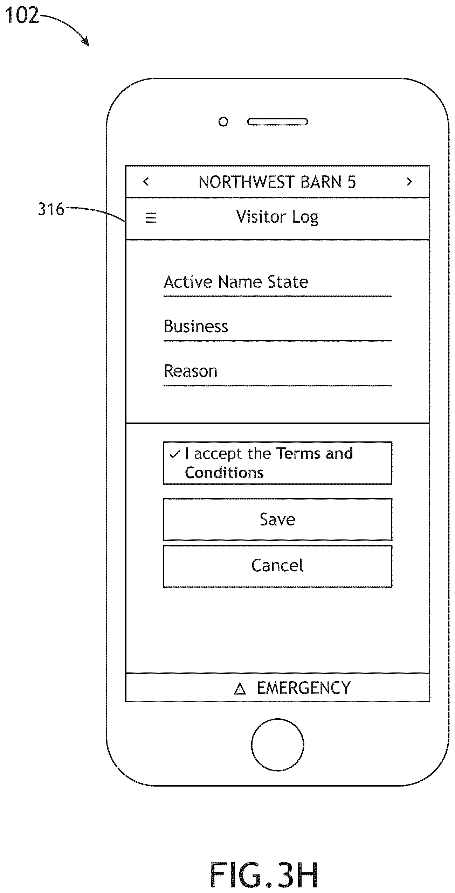

FIG. 3H illustrates a display page 416 of a user device 102 depicting a visitor log, in accordance with one or more embodiments of the present disclosure.

In one embodiment, upon selecting the "Visitor Log" button on display page 306, the user device 102 may show display page 316. In another embodiment, as shown in display page 316, a user 101 may be prompted to enter the name and business of the visitor as well as the reason for the visit. The one or more processors 112 may then be configured to receive this information, store it in memory 114. It is noted herein that logging visitors in system 100 may allow the one or more processors 112 to potentially identify the visitors (as well as users 101) as a vector for the spread of diseases.

For example, imagine a scenario in which multiple farmers have implemented system 100 on their farms, such that a first farm has implemented system 100a, a second farm has implemented a system 100b, and a third farm has implemented a system 100c. In this example, one or more processors 112 may be configured to receive and analyze data received from the first system 100a, second system 100b, and third system 100c.

Continuing with the same example, a visitor (e.g., salesperson, guest, or the like) may visit the first farm with system 100a. A user device 102 of the visitor (e.g., phone, tablet, smart watch) may be used to identify the visitor as having visited the farm. The visitor may then proceed to the second farm (e.g., system 100b) and the third farm (e.g., system 100c), where the user device 102 is used to identify the visitor. In this example, the one or more processors 112 may be configured to identify the visitor as a potential vector for the spread of disease. Similarly, if an outbreak is identified at the first farm (e.g., system 100a), the one or more processors 112 may be configured to identify groups of animals at the second farm (e.g., system 100b) and the third farm (e.g., system 100c) as groups of animals which may be at risk for an outbreak.

In another embodiment, the one or more processors 112 may be configured to transmit one or more alerts to the controller 116. The controller 116 may then be configured to display alerts to a user via user interface 122. Alerts may include, but are not limited to, text messages, automated phone calls, emails, banners, messages via applications ("Apps"), or the like. It is contemplated that the one or more processors 112, 118 may be configured to deliver an alert to the user interface 122 in varying situations. For example, the one or more processors 112 may be configured to cause the user interface 122 to display an alert of that a group of animals has been identified as being at risk for a particular disease outbreak. By way of another example, the one or more processors 112 may be configured to cause the user interface 122 to display an alert of that a user 101 has been identified as a potential vector for the spread of disease. By way of another example, the one or more processors 112 may be configured to cause the user interface 122 to display an alert of that a particular chore was not completed.

In another embodiment, the one or more processors may be configured to add data generated and/or transmitted by system 100 to the blockchain. In particular, the server 110 may be configured to share the generated transaction log to the blockchain, wherein the transaction log includes, but is not limited to, chore completion inputs, identified spatial relationship data, identified interaction data, mortality inputs, and the like. It is contemplated herein that information received by the one or more processors 112 may be submitted and saved on the blockchain or other distributed leger in order to facilitate information distribution and data integrity. For instance, the one or more processors 112 may be configured to transmit and save data using Hyperledger version 1.2. In this regard, the server 110 may be considered a decentralized processing node of a cryptographic processing network (CBN).

In one embodiment, data of system 100 may be stored on a private block of the blockchain such that cryptokeys are required to view and/or share information between individuals including, but not limited to, farm owners (e.g., producers), consumers, and the like. For example, a farmer in the business of raising hogs who has implemented system 100 may store data of system 100 on a private block of the blockchain. Data stored on the blockchain may include, but is not limited to, transactions regarding complete/incomplete chores (e.g., positive transactions and negative transactions). Data regarding positive/negative transactions may paint a picture regarding the treatment the hogs received, including the regularity of feeding/watering, regularity of inspections, regularity of vaccinations/injections, and the like. Upon selling the hogs to a buyer (e.g., consumer or other producer in the food production process), the buyer may desire to view this and additional information collected by system 100 stored on the blockchain. In order to access the data of system 100 stored on the blockchain, both the farmer and the buyer may be required to provide a crypto key. Upon verifying correct cryptokeys, the farmer may then share the information stored on the blockchain with the buyer.

It is noted herein that the one or more components of system 100 may be communicatively coupled to the various other components of system 100 in any manner known in the art. For example, the user devices 102, barn hubs 104, barn nodes 106, server 110, and controller 116 may be communicatively coupled to each other and other components via a wireline (e.g., copper wire, fiber optic cable, and the like) or wireless connection (e.g., RF coupling, IR coupling, data network communication (e.g., WiFi, WiMax, Bluetooth, 3G, 4G, 4G LTE, 5G, and the like).

In one embodiment, the one or more processors 112, 118 may include any one or more processing elements known in the art. In this sense, the one or more processors 112, 118 may include any microprocessor-type device configured to execute software algorithms and/or instructions. In one embodiment, the one or more processors 112, 118 may consist of a desktop computer, mainframe computer system, workstation, image computer, parallel processor, or other computer system (e.g., networked computer) configured to execute a program configured to operate the system 100, as described throughout the present disclosure. It should be recognized that the steps described throughout the present disclosure may be carried out by a single computer system or, alternatively, multiple computer systems. Furthermore, it should be recognized that the steps described throughout the present disclosure may be carried out on any one or more of the one or more processors 112, 118. In general, the term "processor" may be broadly defined to encompass any device having one or more processing elements, which execute program instructions from memory 114, 120. Moreover, different subsystems of the system 100 (e.g., user device 102, barn hub 104, barn node 106, server 110, controller 116) may include processor or logic elements suitable for carrying out at least a portion of the steps described throughout the present disclosure. Therefore, the above description should not be interpreted as a limitation on the present disclosure but merely an illustration.

The memory 114, 120 may include any storage medium known in the art suitable for storing program instructions executable by the associated one or more processors 112, 118 and the data generated by system 100. For example, the memory 114, 120 may include a non-transitory memory medium. For instance, the memory 114, 120 include, but is not limited to, a read-only memory (ROM), a random-access memory (RAM), a magnetic or optical memory device (e.g., disk), a magnetic tape, a solid-state drive and the like. In another embodiment, the memory 114, 120 is configured to store data including, but not limited to, chore completion inputs, identified spatial relationship data, identified interaction data, transaction log, and the like. It is further noted that memory 114, 120 may be housed in a common controller housing with the one or more processors 112, 118. In an alternative embodiment, the memory 114, 120 may be located remotely with respect to the physical location of the processors 112, 118, server 110, controller 116, and the like. In another embodiment, the memory 114, 120 maintains program instructions for causing the one or more processors 112, 118 to carry out the various steps described through the present disclosure.

In one embodiment, a user interface 122 is communicatively coupled to the controller 116. In one embodiment, the user interface 122 may include, but is not limited to, one or more desktops, tablets, smartphones, smart watches, or the like. In another embodiment, the user interface 122 includes a display used to display data of the system 100 to a user. The display of the user interface 122 may include any display known in the art. For example, the display may include, but is not limited to, a liquid crystal display (LCD), an organic light-emitting diode (OLED) based display, or a CRT display. Those skilled in the art should recognize that any display device capable of integration with a user interface 122 is suitable for implementation in the present disclosure. In another embodiment, a user may input selections and/or instructions responsive to data displayed to the user via the user interface 119.

It is noted that the various components of system 100 (e.g., user device 102, barn hub 104, server 110, controller 116) may include any network interface circuitry or network interface device suitable for interfacing with network 108. For example, the network interface circuitry may include wireline-based interface devices (e.g., DSL-based interconnection, cable-based interconnection, T9-based interconnection, and the like). In another embodiment, the network interface circuitry may include a wireless-based interface device employing GSM, GPRS, CDMA, EV-DO, EDGE, WiMAX, 3G, 4G, 4G LTE, 5G, WiFi protocols, RF, LoRa, and the like.

FIG. 4 illustrates a flowchart of a method 400 for verifying animal population activities, in accordance with one or more embodiments of the present disclosure. It is noted herein that the steps of method 400 may be implemented all or in part by system 100. It is further recognized, however, that the method 400 is not limited to the system 100 in that additional or alternative system-level embodiments may carry out all or part of the steps of method 400.

In a step 402, a spatial relationship is identified between a barn hub and a user device. A spatial relationship between a barn hub 104 and a user device 102 may be identified when the user device 102 comes within a selected distance from the barn hub 104, when the user device 102 enters a pre-defined geo-fenced area, or the like. For example, as shown in FIG. 2A, the barn hub 104 may be configured to identify a spatial relationship between the barn hub 104 and a user device 102 when the user device 102 enters the region 111.

In a step 404, an interaction between a barn node and the user device is identified. Interactions between a barn node 106 and a user 101/user device 102 may include, but are not limited to, physical tactile interactions, communicative signal interactions, scanning QR codes, and the like. In this regard, an interaction between a user 101 (e.g., user device 102) and the one or more barn nodes 106 may be determined based on one or more characteristics of the user device 102 (e.g., QR code, ID code, RFID tag, cellular signature, IP address, Bluetooth signature) and/or user 101 (e.g., fingerprint, retinal characteristics, facial characteristics, voice characteristics, DNA).

In a step 406, one or more chore completion inputs are received from a user. The one or more chore completion inputs may be indicative of a completion of one or more chores of a list of chores associated with an identified spatial relationship. For example, as shown in FIG. 3D, the user device 102 may be in a spatial relationship with the "Northwest Barn 5," and the user device 102 may be configured to display a list of chores associated with the spatial relationship (e.g., list of chores to be completed within the Northwest Barn 5). In this example, the user 101 may be able to input one or more chore completion inputs, via the user device 102, indicating that one or more displayed chores have been completed.

In a step 408, one or more incomplete chores of the list of chores are identified. The one or more processors 112 of the server 110 may be configured to identify the one or more incomplete chores based on at least one of the chore completion inputs, identified interaction data, and/or identified spatial relationship data. The server 110 may be configured to identify complete and/or incomplete chores by cross-referencing data within the transaction log (e.g., chore completion inputs, identified spatial relationship data, identified interaction data). For example, the server 110 may be configured to identify one or more incomplete chores by determining that one or more chore completion inputs were not received by the user device 102 during a time interval of the related spatial relationship. For instance, if one or more chore completion inputs for chores within Barn #1 (barn 103a) were received by a user device 102 when the user device 102 was not in a spatial relationship with a barn hub 104 of the barn 103a, the server 110 may be configured to identify the chores as incomplete chores.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken limiting.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected," or "coupled," to each other to achieve the desired functionality, and any two components capable of being so associated can also be viewed as being "couplable," to each other to achieve the desired functionality. Specific examples of couplable include but are not limited to physically mateable and/or physically interacting components and/or wirelessly interactable and/or wirelessly interacting components and/or logically interacting and/or logically interactable components.

Furthermore, it is to be understood that the invention is defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," and the like). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, and the like" is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, and the like). In those instances where a convention analogous to "at least one of A, B, or C, and the like" is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, and the like). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

Further examples of the present disclosure are set out in the following:
According to Example 1, there is provided a system, comprising:
   a user device associated with a user, the user device configured to receive one or more chore completion inputs indicative of a completion of one or more chores of a list of chores;
   a barn node configured to identify an interaction between the barn node and the user device;
   a barn hub communicatively coupled to the barn node, the barn hub configured to:
      identify a spatial relationship between the barn hub and the user device;
      receive identified interaction data associated with the identified interaction from the barn node; and
      receive the one or more chore completion inputs; and
   a server communicatively coupled to the barn hub, the server including one or more processors configured to execute a set of program instructions stored in a memory, the set of program instructions configured to cause the one or more processors to:
      receive one or more signals from the barn hub, the one or more signals including the one or more chore completion inputs, the identified interaction data, and identified spatial relationship data associated with the identified spatial relationship;
      store a transaction log in the memory, the transaction log including the chore completion inputs, the identified interaction data, and the spatial relationship data; and
      identify one or more incomplete chores of the list of chores based on at least one of the one or more chore completion inputs, the identified interaction data, and the identified spatial relationship data.
Example 2 involves the system of Example 1, wherein the one or more processors are further configured to:
   identify one or more complete chores of the list of chores based on at least one of the chore completion inputs, the identified interaction data, and the identified spatial relationship data.
Example 3 involves the system of Example 2, wherein identifying one or more complete chores of the list of chores comprises:
   determining the one or more chore completion inputs were received by the user device during a time interval of the spatial relationship.
Example 4 involves the system of Example 1, wherein identifying one or more incomplete chores of the list of chores comprises:
   determining the one or more chore completion inputs were not received by the user device during a time interval of the spatial relationship.
Example 5 involves the system of Example 2, wherein the one or more processors are further configured to:
   identify a positive transaction when each chore of the list of chores has been identified as complete; and
   identify a negative transaction when at least one chore of the list of chores has been identified as incomplete.
Example 6 involves the system of Example 1, wherein the barn node comprises at least one of a QR code scanner, a capacitive touch sensor, a resistive touch sensor, a biometric sensor, or a mechanical device.
Example 7 involves the system of Example 1, wherein the one or more processors are further configured to:
   identify one or more encounters between the user and one or more groups of animals based on at least one of the identified spatial relationship data or the identified interaction data.
Example 8 involves the system of Example 1 and further comprises a user interface communicatively coupled to a controller, wherein the one or more processors are further configured to:
   transmit one or more signals to the controller, wherein the one or more signals are configured to cause the controller to display one or more alerts indicative of the one or more identified incomplete chores.
Example 9 involves the system of Example 1, wherein the user device is further configured to:
   receive one or more mortality inputs from the user.
Example 10 involves the system of Example 9, wherein the one or more processors are further configured to:
   identify one or more disease outbreaks based on the one or more mortality inputs.
Example 11 involves the system of Example 9, wherein the one or more processors are further configured to:
   identify one or more individuals as potential vectors for spread of disease based on the one more mortality inputs.
Example 12 involves the system of Example 9, wherein the one or more processors are further configured to:
   identify one or more groups of animals as being at risk for a disease outbreak based on the one or more mortality inputs.
Example 13 involves the system of Example 1, wherein the barn hub is configured to identify the spatial relationship between the barn hub and the user device when the user device comes within a selected distance of the barn hub or enters a selected geo-fenced area.
Example 14 involves the system of Example 1, wherein the barn node includes one or more sensors configured to acquire sensor readings, the one or more sensors including at least one of a temperature sensor, a pressure sensor, a humidity sensor, a composition sensor, or a light detection and ranging (LIDAR) sensor.
Example 15 involves the system of Example 14, wherein the barn hub is configured to receive the sensor readings from the barn node and transmit the sensor readings to the server, wherein the server is configured to store the sensor readings in memory.
Example 16 involves the system of Example 1, wherein the one or more processors are further configured to:
   receive, from the barn hub, one or more images acquired by one or more imaging devices of the barn node; and
   identify one or more characteristics of a group of animals based on the one or more images.
Example 17 involves the system of Example 16, wherein identifying one or more characteristics of a group of animals comprises:
   generating a machine learning classifier; and
   identifying the one or more characteristics of the group of animals with the machine learning classifier.
Example 18 involves the system of Example 1, wherein the one or more processors are further configured to store the transaction log to the blockchain.
According to Example 19 there is provided a system comprising:
   a user device configured to receive one or more chore completion inputs indicative of a completion of one or more chores of a list of chores;
   a barn hub configured to:
      identify a spatial relationship between the barn hub and the user device;
      receive identified interaction data associated with an identified interaction between a barn node and the user device; and
      receive the one or more chore completion inputs; and
   a server communicatively coupled to the barn hub, the server including one or more processors configured to execute a set of program instructions stored in memory, the set of program instructions configured to cause the one or more processors to:
      receive one or more signals from the barn node, the one or more signals including the chore completion inputs, the identified interaction data, and identified spatial relationship data associated with the identified spatial relationship;
      identify one or more incomplete chores of the list of chores based on at least one of the one or more chore completion inputs, the identified interaction data, and the identified spatial relationship data; and
      identify one or more complete chores of the list of chores based on at least one of the one or more chore completion inputs, the identified interaction data, and the identified spatial relationship data.
According to Example 20 there is provided a method for verifying animal population activities, comprising:
   identifying a spatial relationship between a barn hub and a user device;
   identifying an interaction between a barn node and the user device;
   receiving one or more chore completion inputs from a user, the one or more chore completion inputs indicative of a completion of one or more chores of a list of chores associated with the identified spatial relationship; and
   identifying one or more incomplete chores of the list of chores based on at least one of the one or more chore completion inputs, identified interaction data associated with the identified interaction, and identified spatial relationship data associated with the identified spatial relationship.

## Claims

1. A system comprising:
a barn hub configured to:
identify a spatial relationship between the barn hub and one or more user devices;
receive identified interaction data associated with an identified interaction between a barn node and the one or more user devices; and
receive one or more chore completion inputs; and
a server communicatively coupled to the barn hub, the server including one or more processors configured to execute a set of program instructions stored in memory, the set of program instructions configured to cause the one or more processors to:
receive one or more signals from the barn hub, the one or more signals including the one or more chore completion inputs, the identified interaction data, and identified spatial relationship data associated with the identified spatial relationship;
identify one or more incomplete chores of a list of chores based on at least one of the one or more chore completion inputs, the identified interaction data, or the identified spatial relationship data; and
identify one or more complete chores of the list of chores based on at least one of the one or more chore completion inputs, the identified interaction data, or the identified spatial relationship data.

2. The system of Claim 1, further comprising:
a barn node configured to identify the interaction between the barn node and the one or more user devices.

3. The system of Claim 1, wherein identifying one or more complete chores of the list of chores comprises:
determining the one or more chore completion inputs were received by the one or more user devices during a time interval of the spatial relationship.

4. The system of Claim 1, wherein identifying one or more incomplete chores of the list of chores comprises:
determining the one or more chore completion inputs were not received by the one or more user devices during a time interval of the spatial relationship.

5. The system of Claim 1, wherein the one or more processors are further configured to:
identify a positive transaction when each chore of the list of chores has been identified as complete; and
identify a negative transaction when at least one chore of the list of chores has been identified as incomplete.

6. The system of Claim 2, wherein the barn node comprises at least one of a QR code scanner, a capacitive touch sensor, a resistive touch sensor, a biometric sensor, or a mechanical device.

7. The system of Claim 1, wherein the one or more processors are further configured to:
identify one or more encounters between a user and one or more groups of animals based on at least one of the identified spatial relationship data or the identified interaction data.

8. The system of Claim 1, further comprising a user interface communicatively coupled to a controller, wherein the one or more processors are further configured to:
transmit one or more signals to the controller, wherein the one or more signals are configured to cause the controller to display one or more alerts indicative of the one or more identified incomplete chores.

9. The system of Claim 1, wherein the one or more processors are further configured to:
receive one or more mortality inputs from a user; and
identify one or more disease outbreaks based on the one or more mortality inputs, or
identify one or more individuals as potential vectors for spread of disease based on the one or more mortality inputs, or
identify one or more groups of animals as being at risk for a disease outbreak based on the one or more mortality inputs.

10. The system of Claim 1, wherein the barn hub is configured to identify the spatial relationship between the barn hub and the one or more user devices when the user device comes within a selected distance of the barn hub or enters a selected geo-fenced area.

11. The system of Claim 1, wherein the barn node includes one or more sensors configured to acquire sensor readings, the one or more sensors including at least one of a temperature sensor, a pressure sensor, a humidity sensor, a composition sensor, or a light detection and ranging (LIDAR) sensor.

12. The system of Claim 1, wherein the one or more processors are further configured to:
receive, from the barn hub, one or more images acquired by one or more imaging devices of the barn node; and
identify one or more characteristics of a group of animals based on the one or more images.

13. The system of Claim 1, wherein the one or more processors are further configured to store a transaction log to blockchain.

14. The system of Claim 1, wherein the identified spatial relationship between the barn hub and the one or more user devices is identified using one or more wireless communication protocols.

15. The system of Claim 14, wherein the one or more wireless communication protocols comprises LoRa.
